# EUROPEAN PATENT APPLICATION

(11) **EP 4 571 112 A1**
(43) Date of publication of application: **18.06.2025**
(21) Application number: 24219635.0
(22) Date of filing: 13.12.2024
(51) Int. Cl.: F04B 53/18, F04B 17/03, F04B 49/06, F04B 49/10, F04B 39/02, F04B 53/08, F16N 19/00

(54) **LUBRICATION SYSTEM FOR PUMP DRIVE**

(30) Priority: 14.12.2023 US 202318539425
(71) Applicant: Haskel International, LLC, Burbank, CA 91502 (US)
(72) Inventor: GILLBERG, Richard, Burbank, 91502 (US); BABAKHANLOO, Argin, Burbank, 91502 (US)
(74) Representative: Murgitroyd & Company

(57) **Abstract**

A pump drive system includes a housing, an electric motor disposed within the housing, the electric motor being configured to drive a piston of a pump, a lubricant reservoir configured to store a lubricant, a conduit configured to direct lubricant from the lubricant reservoir into the housing to submerge the electric motor in lubricant, and a sensor configured to monitor a level of lubricant in the lubricant reservoir.

## Description

### TECHNICAL FIELD

The present disclosure is directed pumps and more specifically to a lubrication system for a pump drive.

### BACKGROUND

Booster pumps may be used to increase the pressure of a fluid, such as a gas. A booster pump generally includes one or more stages driven by a piston housed within a cylinder. The booster includes a pump drive configured to move the piston to compress the fluid in the cylinder, thereby increasing the pressure of the fluid. The pump drive may include various components configured to move relative to one another to drive corresponding movement of the piston. For example, the pump drive may include a motor (e.g., an electric motor) configured to move within a housing to drive movement of the piston. However, direct contact between the motor and the housing can sometimes be detrimental to the motor in a manner that reduces operational efficiency of the pump and/or increases wear of the pump drive, reducing a useful lifespan of the pump drive.

### SUMMARY

In one embodiment, the present application is directed to a pump drive system that includes a housing, an electric motor disposed within the housing, the electric motor being configured to drive a piston of a pump, a lubricant reservoir configured to store a lubricant, a conduit, and a sensor. The conduit is configured to direct the lubricant from the lubricant reservoir into the housing to submerge the electric motor in the lubricant, and the sensor is configured to monitor a level of the lubricant in the lubricant reservoir.

In another embodiment, the present application is directed to a booster pump system includes a cylinder with a chamber, a piston disposed within the chamber of the cylinder, and an electric motor configured to drive movement of the piston relative to the chamber of the cylinder to pressurize fluid within the chamber and discharge pressurized fluid from the chamber. The electric motor is disposed in a housing And the booster pump system also includes a lubricant reservoir, a conduit fluidly coupled to the lubricant reservoir and configured to direct lubricant from the lubricant reservoir into the housing, and a sensor configured to monitor a level of lubricant in the lubricant reservoir.

In a further embodiment, a non-transitory computer-readable medium includes instructions that, when executed by one or more processors, are configured to cause the one or more processors to monitor a level of lubricant contained within a lubricant reservoir. The lubricant reservoir is configured to store lubricant and to direct lubricant into a housing containing a motor of a booster pump, the motor being configured to drive movement of a piston of the booster pump to pressurize fluid within a cylinder of the booster pump. The instructions, when executed by the one or more processors, are also configured to cause the one or more processors to determine the level of lubricant in the lubricant reservoir is below a threshold level and reduce operation of the motor in response to determining the level of lubricant in the lubricant reservoir is below the threshold level.

### BRIEF DESCRIPTION OF THE DRAWINGS

To complete the description and provide a better understanding of the present disclosure, a set of drawings is provided. The drawings form an integral part of the description and illustrate an embodiment of the present disclosure, which should not be interpreted as restricting the scope of the disclosure, but just as an example of how the invention can be carried out.
FIG. 1 is a cross-sectional side view of a pump system with a pump drive system, in accordance with an embodiment of the present disclosure.
FIG. 2 is a perspective view of the pump drive system of the pump system of FIG. 1.
FIG. 3 is a cross-sectional side view of the pump drive system of FIG. 2.
FIG. 4 is a perspective view of a lubrication system of the pump system of FIG. 1.
FIG. 5 is a cross-sectional side view of a portion of a lubrication system for a pump system, in accordance with an embodiment of the present disclosure.
FIG. 6 is a perspective view of another pump system, in accordance with an embodiment of the present disclosure.
FIG. 7 is a flowchart of a method for operating a pump drive system, in accordance with an embodiment of the present disclosure.

Like numerals have been used throughout the Figures.

### DETAILED DESCRIPTION

The present disclosure is directed to lubricating a pump drive of a pump, such as a booster. During operation, the booster increases a pressure of a fluid. For example, the booster includes a cylinder that defines a chamber, and a piston that is disposed in and movable within the chamber. The fluid is directed into the chamber, and the piston is configured to move within the chamber to reduce the volume in which the fluid is contained within the chamber, thereby pressurizing the fluid. The pressurized fluid is then discharged from the chamber.

In some embodiments, the pump includes a motor configured to drive movement of the piston. As an example, the piston may be connected to a drive shaft, and the motor may be configured to move to cause corresponding movement of the drive shaft and therefore of the piston within the chamber. The motor may be contained within a housing configured to shield the motor from an exterior environment. However, the motor may be susceptible to directly contacting the housing. Direct contact between the motor and the housing may negatively affect operation of the motor, such as by reducing movement of the motor relative to the housing and/or by reducing a useful lifespan of the motor. As a result, operation of the pump to pressurize the fluid may also be negatively affected.

Thus, avoiding direct contact between the motor and the housing may improve operation of the pump, such as to move the piston and pressurize fluid. Therefore, in accordance with embodiments of the present disclosure, a pump includes a lubrication system configured to direct a lubricant into the housing in which the motor is disposed to provide lubrication between the motor and the housing. For example, the lubricant may fill the housing and may flow at the interface between the motor and the housing. Consequently, the lubricant may prevent, or at least discourage, the motor and the housing from directly contacting one another. That is, instead of the motor moving or impinging against the housing (e.g., abrading against the housing), the motor may sit within the lubricant. As a result, the motor may move more easily and/or readily to drive corresponding movement of the piston and pressurize the fluid.

Additionally, the pump includes a sensor configured to monitor a parameter indicative of a level of lubricant in the lubricant reservoir. In at least some of these instances, the pump may also include a control system communicatively coupled to the sensor and configured to receive sensor data indicative of the monitored parameter. The control system is configured to determine the level of lubricant in the lubricant reservoir based on the sensor data and operate accordingly. For example, the control system may compare the level of lubricant to a threshold level and reduce operation of the pump (e.g., of the motor) in response to the level of lubricant being below the threshold level. Indeed, the level of lubricant being below the threshold level may indicate that lubricant cannot be readily directed into the housing to provide a barrier between the motor and the housing. Thus, there may be an increased potential of direct contact between the motor and the housing, and the control system may reduce operation of the pump to prevent or discourage the motor from directly contacting the housing.

In certain embodiments, the sensor data received from the sensor includes an image or image data of lubricant visible in the lubricant reservoir. For instance, the lubricant reservoir may include a wall that is at least partially transparent or translucent, and a captured image may include the wall and the lubricant visible through the wall. Thus, the image can directly indicate an amount of lubricant in the lubricant reservoir (e.g., a height of the lubricant with respect to the wall). In additional or alternative embodiments, the sensor data is based on a refractive property of the lubricant reservoir (e.g., as detected through the at least partially transparent or translucent wall and into the lubricant reservoir) and/or a capacitance of the lubricant reservoir. Still further, in some embodiments, the sensor data indicates a flow rate of lubricant (e.g., through a conduit fluidly coupled to the lubricant reservoir and configured to direct lubricant into the housing). In any of these embodiments, the sensor may be positioned exteriorly of the lubricant reservoir. As such, the sensor does not come into direct contact with the lubricant stored in the lubricant reservoir, and a structural integrity of the sensor is not affected by interaction with the lubricant. Moreover, an externally positioned sensor will not negatively affect (e.g., reduce) storage capacity of lubricant within the lubricant reservoir and/or otherwise negatively impact a flow of the lubricant toward the housing.. Thus, the pump and/or the sensor can continue to operate effectively.

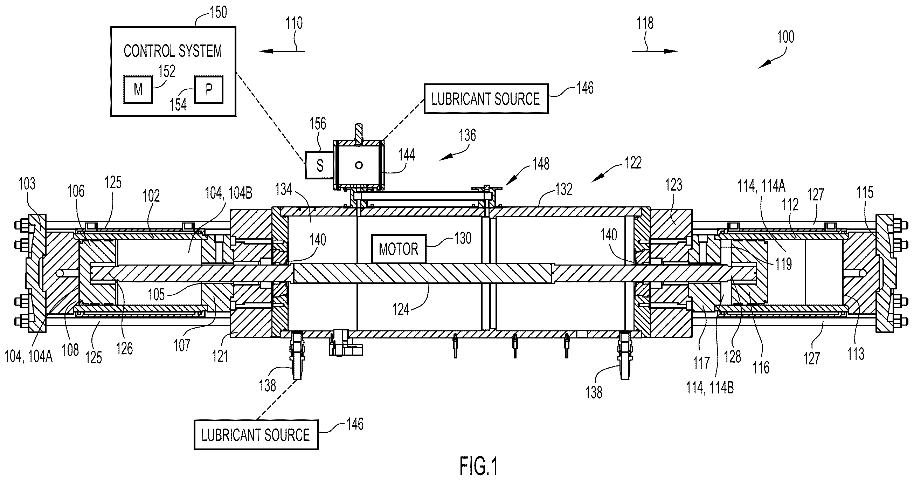

FIG. 1 is a cross-sectional view of a pump system 100. The pump system 100 is a booster configured to increase pressure of a fluid, such as a gas. The pump system 100 includes a first cylinder 102 defining a first chamber 104 within which at least one working fluid may be pumped/pressurized. More specifically, a first piston 106 is disposed within the first chamber 104 and is configured to move within the first chamber 104 to pressurize one or more fluids. The pump system 100 also includes a second cylinder 112 defining a second chamber 114 within which at least one working fluid may be pumped/pressurized (e.g., the same or different fluid as that in the first chamber 104). A second piston 116 is disposed within the second chamber 114 and is configured to move within the second chamber 114 to pressurize the fluid.

In some embodiments, the first chamber 104 defined by the first cylinder 102 is divided into two pumping chambers, with one on either side of the first piston 106, and/or the second chamber 114 defined by the second cylinder 112 is divided into two pumping chambers, with one on either side of the second piston 116. For example, a working fluid may enter the first cylinder 102 at a first pumping chamber 104A between the first piston 106 and a first end wall 108 of a first end cap 103 and/or at a second pumping chamber 104B between the first piston 106 and an outer wall 105 of a first inner cap 107. Additionally or alternatively, a working fluid may enter the second cylinder 112 at a third pumping chamber 114A between the second piston 116 and a second end wall 113 of a second end cap 115 and/or at a fourth pumping chamber 114B between the second piston 116 and an outer wall 119 of a second inner cap 117.

Thus, with the depicted embodiment, a working fluid may be pumped/pressurized within each of the pumping chambers 104, 114. To this end, although not shown, the first end cap 103 and the second end cap 115 may include passageways and valves (e.g., check valves) to allow the working fluid to flow into and out of the first pumping chamber 104A and the third pumping chamber 114A, respectively. Moreover, the first inner cap 107 and the second inner cap 117 may include passageways and valves to allow the working fluid to flow into and out of the second pumping chamber 104B and the fourth pumping chamber 114B, respectively. By way of example, movement of the first piston 106 in a first direction 110, toward the first end wall 108, reduces a volume of the first pumping chamber 104A to increase the pressure of the working fluid in the first pumping chamber 104A and discharge the working fluid out of the first pumping chamber 104A, while increasing a volume of the second pumping chamber 104B to draw the working fluid into the second pumping chamber 104B. Movement of the first piston 106 in a second direction 118, away from the first end wall 108, increases the volume of the first pumping chamber 104A to draw the working fluid into the first pumping chamber 104A, while reducing the volume of the second pumping chamber 104B to increase the pressure of the working fluid in the second pumping chamber 104B and discharge the working fluid out of the second pumping chamber 104B. Similarly, movement of the second piston 116 in the second direction 118, toward the second end wall 113, reduces a volume of the third pumping chamber 114A to increase the pressure of the working fluid in the third pumping chamber 114A and discharge the working fluid out of the third pumping chamber 114A, while increasing a volume of the fourth pumping chamber 114B to draw the working fluid into the fourth pumping chamber 114B. Movement of the second piston 116 in the first direction 110, away from the second end wall 113, increases the volume of the third pumping chamber 114A to draw the working fluid into the third pumping chamber 114A, while reducing the volume of the fourth pumping chamber 114B to increase the pressure of the working fluid in the fourth pumping chamber 114B and discharging the working fluid out of the fourth pumping chamber 114B.

Additionally or alternatively, each of the first chamber 104 and/or the second chamber 114 may have a single pumping chamber for pressurizing working fluid. That is, working fluid may be drawn into and pressurized at side of the first piston 106 (e.g., the first pumping chamber 104A) and/or of the second piston 116 (e.g., the third pumping chamber 114A), whereas a different fluid may be drawn into the other side of the first piston 106 (e.g., the second pumping chamber 104B) and/or of the second piston 116 (e.g., the fourth pumping chamber 114B) to facilitate movement of the pistons 106, 116. For instance, movement of the first piston 106 in the first direction 110, toward the first end cap 103 to reduce a volume of the first pumping chamber 104A and to increase a volume of the second pumping chamber 104B pressurizes the working fluid in the first pumping chamber 104A, whereas ambient air, lubricant, or any other such fluid may fill the second pumping chamber 104B to provide "breathing" or venting of the first piston 106 (e.g., between strokes of the first piston 106). Similarly, movement of the second piston 116 in the second direction 118, toward the second end cap 115 to reduce a volume of the third pumping chamber 114A and to increase a volume of the fourth pumping chamber 114B pressurizes the working fluid in the third pumping chamber 114A, whereas ambient air, lubricant, or any other such fluid may fill the fourth pumping chamber 114B to provide "breathing" or venting of the second piston 116 (e.g., between strokes of the second piston 116).

In some embodiments, a fluid flow directed through the pump system 100 is pressurized by each of the first piston 106 and the second piston 116. For example, the fluid flow is initially pressurized by the first piston 106 (e.g., a low-pressure piston) within the first chamber 104 (e.g., a low-pressure chamber), and the fluid flow is directed from the first chamber 104 into the second chamber 114 (e.g., a high-pressure chamber) for further pressurization by the second piston 116 (e.g., a high-pressure piston). In such embodiments, the pump system 100 is a two-stage booster that pressurizes the same fluid flow via each of the pistons 106, 116. In additional or alternative embodiments, different fluid flows are pressurized by the pistons 106, 116. That is, separate fluid flows are directed into the first chamber 104 and into the second chamber 114 for pressurization. In such embodiments, the pump system 100 is a single-stage booster. The pump system might also operate in any other stage arrangement now known or developed hereafter.

In some embodiments, a fluid flow directed through the pump system 100 is pressurized by each of the first piston 106 and the second piston 116. For example, the fluid flow is initially pressured by the first piston 106 (e.g., a low-pressure piston) within the first chamber 104 (e.g., a low-pressure chamber), and the fluid flow is directed from the first chamber 104 into the second chamber 114 (e.g., a high-pressure chamber) for further pressurization by the second piston 116 (e.g., a high-pressure piston). In such embodiments, the pump system 100 is a two-stage booster that pressurizes the same fluid flow via each of the pistons 106, 116. In additional or alternative embodiments, different fluid flows are pressurized by the pistons 106, 116. That is, separate fluid flows are directed into the first chamber 104 and into the second chamber 114 for pressurization. In such embodiments, the pump system 100 is a single-stage booster. The pump system might also operate in any other stage arrangement now known or developed hereafter.

The pump system 100 of the depicted embodiment further includes a pump drive system 122 configured to actuate the pistons 106, 116. The pump drive system 122 includes a drive shaft or rod 124 coupled to each of the first piston 106 and the second piston 116. For instance, the drive shaft 124 includes a first end 126 that extends toward the first cylinder 102 to couple to the first piston 106, as well as a second end 128, opposite the first end 126, that extends toward the second cylinder 112 to couple to the second piston 116. Movement of the drive shaft 124 therefore drives movement of each of the pistons 106, 116, at least in the depicted embodiment. However, in other embodiments, a pump drive system 122 might be connected to a single cylinder and, thus, might drive a single piston.

In the embodiment depicted in FIG. 1, movement (e.g., translation) of the drive shaft 124 in the first direction 110 drives movement of the first piston 106 toward the first end wall 108 and movement of the second piston 116 away from the second end wall 113. Accordingly, movement of the drive shaft 124 in the first direction 110 reduces a volume of the first pumping chamber 104A to pressurize the fluid in the first pumping chamber 104A and increases a volume of the third pumping chamber 114A to draw fluid into the third pumping chamber 114A. Movement (e.g., translation) of the drive shaft 124 in the second direction 118 drives movement of the first piston 106 away from the first end wall 108 and movement of the second piston 116 toward the second end wall 113. Consequently, movement of the drive shaft 124 in the second direction 118 increases a volume in the first pumping chamber 104A to draw fluid into the first pumping chamber 104A and reduces a volume of the third pumping chamber 114A to pressurize the fluid in the third pumping chamber 114A. The drive shaft 124 may alternate between moving in the first direction 110 and in the second direction 118 to alternately pressurize fluid in the first pumping chamber 104A and in the third pumping chamber 114A.

The illustrated pump drive system 122 includes a motor 130 configured to move the drive shaft 124. In the depicted embodiment, the motor 130 is an electric motor configured to convert electrical energy into linear motion to move the drive shaft 124 in the first direction 110 and in the second direction 118. For example, the motor 130 may include a ball screw, a magnet, windings (e.g., a rotor, a stator), and so forth that can convert electrical energy to rotary motion and then to linear motion. The motor 130 is shown schematically for visualization purposes. However, it should be noted that the motor 130 can include any suitable components to drive movement of the drive shaft 124; the motor 130 need not be electric.

The pump drive system 122 also includes a housing 132 defining an interior 134. The drive shaft 124 extends through the interior 134, and the motor 130 is disposed within the interior 134. Thus, the housing 132 shields the motor 130 from an exterior environment, protecting the motor 130 from dust, debris, or other contaminants in the exterior environment. The housing 132 of the depicted embodiment is coupled to each of the first cylinder 102 and the second cylinder 112 via adapters 121, 123, respectively, to align the drive shaft 124 (e.g., the first end 126, the second end 128) with the first chamber 104 and with the second chamber 114. For example, a first adapter 121 is coupled to the housing 132 and to the first inner cap 107, and the first inner cap 107 (e.g., the outer wall 105) is coupled to the first cylinder 102 to couple and align the housing 132 to the first cylinder 102. A second adapter 123 is also coupled to the housing 132 and to the second inner cap 117, and the second inner cap 117 (e.g., the outer wall 119) is coupled to the second cylinder 112 to couple and align the housing 132 to the second cylinder 112. Moreover, the first end cap 103 (e.g., the first end wall 108) is coupled to the first cylinder 102, and first stay rods 125 are coupled to the first adapter 121 and to the first end cap 103, thereby providing further securement between the housing 132 coupled to the first adapter 121 and the first cylinder 102 coupled to the first end cap 103. The second end cap 115 (e.g., the second end wall 113) is coupled to the second cylinder 112, and second stay rods 127 are coupled to the second adapter 123 and to the second end cap 115, thereby providing further securement between the housing 132 coupled to the second adapter 123 and the second cylinder 112 coupled to the second end cap 115. However, in other embodiments, the housing 132 may be coupled to one or more cylinders in any manner now known or developed hereafter. In any case, the motor 130 is configured to operate and move (i.e., to convert power into motion) within the interior 134 to drive movement of the drive shaft 124 relative to the housing 132 to move the pistons 106, 116.

For this reason, it is desirable to ensure that the motor 130 is free to move relative to the housing 132. As an example, it may be desirable to prevent or discourage a part of the motor 130 from directly contacting the housing 132. Direct contact between the motor 130 and the housing 132 may cause the motor 130 to impinge (e.g., abrade, scrape) against the housing 132 to reduce efficiency of the motor 130 (e.g., to drive movement of the drive shaft 124), increase wear of the motor 130 and/or of the housing 132, or otherwise reduce desirable operation of the pump drive system 122.

As such, the pump drive system 122 includes a lubrication system 136 configured to direct a lubricant (e.g., oil, a liquid) into the interior 134 of the housing 132. The lubricant may flow between the motor 130 and the housing 132 to block, or at least discourage, direct contact between the motor 130 and the housing 132 and facilitate movement of the motor 130 within the housing 132. That is, the lubricant may create a buffer or cushion between the motor 130 and the housing 132. Consequently, the lubricant allows the motor 130 to drive movement of the pistons 106, 116 via the drive shaft 124 to pressurize fluid. The lubricant may also reduce a temperature of the motor 130. For example, the lubricant may absorb heat from the motor 130 upon contacting the motor 130. By reducing the temperature of the motor 130, the lubricant may reduce wear of the motor 130 to increase a useful lifespan of the motor 130.

In certain embodiments, the lubricant may continually flow into and out of the interior 134 of the housing 132. As an example, one or more lubricant conduits 138 may direct lubricant into the interior 134 of the housing 132 from a lubricant source 146 one or more lubricant conduits 138 may direct lubricant from a lubricant source 146 into the interior 134. Additionally or alternatively, the lubricant conduit(s) 138 may direct lubricant out of the interior 134. For instance, usage of the lubricant within the interior 134 may increase a temperature of the lubricant, contaminate the lubricant (e.g., by absorbing particles of/released by the motor 130 and/or of the housing 132), change a viscosity of the lubricant, or otherwise affect the lubricant in a manner that reduces effectiveness of the lubricant, such as the capability of the lubricant to facilitate movement and/or to reduce a temperature of the motor 130. For this reason, the lubricant may be directed out of the interior 134 via one or more lubricant outlet conduits 138 for processing, such as filtering and/or cleaning, and additional lubricant may be introduced into the interior 134 by the lubrication system 136. As a result, the lubricant within the interior 134 may continue to enable effective operation of the motor 130. As another example, lubricant may leak or otherwise be directed out of the interior 134 (e.g., toward the cylinders 102, 112) via openings 140 through which the drive shaft 124 extends for positioning within the cylinders 102, 112. In any case, the lubrication system 136 operates to replenish the lubricant within the interior 134, thereby ensuring that there is a sufficient amount of lubricant to flow between the motor 130 and the housing 132.

To this end, the lubrication system 136 includes a lubricant reservoir or vessel 144 configured to store lubricant and discharge lubricant toward the housing 132. In some embodiments, the lubricant reservoir 144 is fluidly coupled to a lubricant source 146 and is configured to receive lubricant from the lubricant source 146. For example, oil is directed or pumped through the lubricant reservoir 144 and into the housing 132. Additionally or alternatively, the lubricant system 136 might be a closed loop system, and lubricant may circulate between the lubrication system 136 and the housing 132, such as resulting from movement of the pump drive system 122 (e.g., of the drive shaft 124 within the housing 132). In either embodiment, the presence of lubricant in the lubricant reservoir 144 may indicate the housing 132 is sufficiently filled or overfilled with lubricant to cause lubricant to flow from the housing 132 into the lubricant reservoir 144.

In the depicted embodiment, the lubricant reservoir 144 is also fluidly coupled to a conduit system 148 and is configured to direct lubricant to the conduit system 148. The conduit system 148 is fluidly coupled to the interior 134 of the housing 132 and is configured to direct the lubricant received from the lubricant reservoir 144 into the interior 134. As such, the lubrication system 136 is configured to direct lubricant from the lubricant source 146 into the housing 132 via the lubricant reservoir 144 and the conduit system 148. However, in other embodiments, the lubricant reservoir 144 can be directly connected to the housing 132.

Still referring to FIG. 1, the pump drive system 122 of the depicted embodiment includes a control system 150 configured to operate various components of the pump drive system 122. For example, the control system 150 is configured to operate the motor 130. Additionally, the control system 150 is configured to monitor a lubricant level within the lubricant reservoir 144. Indeed, it is desirable to ensure that there is a sufficient amount of lubricant stored in the lubricant reservoir 144 to indicate the housing 132 is adequately filled or overfilled with lubricant for desirable operation of the motor 130. However, the lubricant level of the lubricant reservoir 144 may fall below a desirable or threshold level. In some circumstances, the lubricant level within the lubricant reservoir 144 may be insufficient as a result of air entrapment within the housing 132 that may initially push some lubricant out of the housing 132 and into the lubricant reservoir 144, and then subsequent movement of lubricant (e.g., driven by operation of the pump drive system 122) to fill the air entrapment may cause lubricant to flow from the lubricant reservoir 144 into the housing 132, thereby reducing the lubricant level within the lubricant reservoir 144. Similarly, an insufficient amount of lubricant may initially be provided to the pump drive system 122, such as via an improper fill procedure (e.g., during maintenance), to cause the housing 132 to be inadequately filled or overfilled and limit the lubricant level within the lubricant reservoir 144. Additionally or alternatively, lubricant may undesirably flow out of the pump drive system 122 during operation, such as through a seal, to reduce a total amount of lubricant available for filling the housing 132 and the lubricant reservoir 144. The control system 150 is configured to monitor a lubricant level within the lubricant reservoir 144 to enable desirable operation of the motor 130. Other embodiments, however, may not include a control system 150 and may instead, for example, be configured to connect, via a wired or wireless connection, to a separate or external control system.

The control system 150 includes a memory 152 and a processor 154 (e.g., processing circuitry). The memory 152 includes read only memory (ROM), random access memory (RAM), magnetic disk storage media devices, optical storage media devices, flash memory devices, electrical, optical, or other physical/tangible (e.g., non-transitory) memory storage devices. Thus, in general, the memory 152 includes one or more computer-readable storage media (e.g., a memory device) encoded with software with computer executable instructions that may be executed to effectuate the operations described herein. For example, the memory 152 stores or is encoded with instructions for monitoring a level of lubricant in the lubricant reservoir 144. The processor 154 includes a collection of one or more microcontrollers and/or microprocessors, for example, each configured to execute respective software instructions stored in the memory 152. The processor 154 is configured to, for example, execute the instructions stored in the memory 152 to monitor the level of lubricant within the lubricant reservoir 144.

By way of example, the control system 150 is communicatively coupled to a sensor 156 configured to provide a parameter indicative of the level of lubricant within the lubricant reservoir 144. Thus, the control system 150 is configured to receive data related to the parameter from the sensor 156, and determine the level of lubricant within the lubricant reservoir 144 based on the data. The control system 150 may then perform an operation based on the determined level of lubricant within the lubricant reservoir 144. For example, the control system 150 may be configured to reduce or suspend operation of the motor 130 in response to determining the level of lubricant within the lubricant reservoir 144 is below a threshold level to avoid a potential operation of the pump system 100 in which the motor 130 is in direct contact with the housing 132. The control system 150 is additionally or alternatively configured to perform a different operation in response to determining the level of lubricant within the lubricant reservoir 144 is below the threshold level, such as to direct lubricant from the lubricant source 146 into the lubricant reservoir 144 (e.g., by operating a lubricant pump) and/or to provide a notification to a user (e.g., an operator, a technician) to prompt a user action to address the low amount of lubricant in the lubricant reservoir 144.

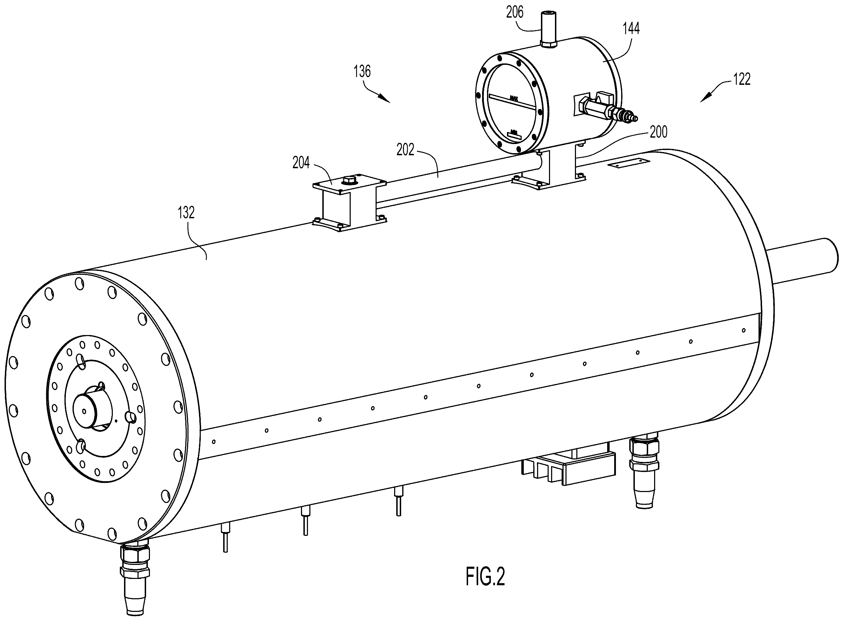

FIG. 2 is a perspective view of the pump drive system 122 with the lubrication system 136. The lubrication system 136 includes a first lubricant inlet conduit 200 (e.g., a tube or pipe inside the structure labeled 200) fluidly coupled to the lubricant reservoir 144 and to the housing 132. The first lubricant inlet conduit 200 is directly coupled to (e.g., mounted onto) the lubricant reservoir 144 and therefore may receive lubricant stored within the lubricant reservoir 144. The first lubricant inlet conduit 200 is configured to direct lubricant received from the lubricant reservoir 144 into the housing 132.

The lubrication system 136 also includes an intermediate conduit 202 (e.g., a tube) fluidly coupled to the first lubricant inlet conduit 200, as well as a second lubricant inlet conduit 204 fluidly coupled to the intermediate conduit 202 and to the housing 132. The intermediate conduit 202 is configured to direct lubricant from the first lubricant inlet conduit 200 to the second lubricant inlet conduit 204, and the second lubricant inlet conduit 204 is then configured to direct the lubricant received from the intermediate conduit 202 into the housing 132. As such, the lubrication system 136 is configured to direct lubricant from the lubricant reservoir 144 into the housing 132 via both the first lubricant inlet conduit 200 and the second lubricant inlet conduit 204. Thus, the lubrication system 136 may be able to deliver lubricant into the housing 132 at a higher flow rate as compared to usage of a single lubricant inlet conduit. By way of example, movement of the pump drive system 122 (e.g., of the drive shaft 124 within the housing 132) may force lubricant back and forth between the interior 134 of the housing 132 (e.g., near the motor 130) and the lubricant reservoir 144, and one of the first lubricant inlet conduit 200 or the second lubricant inlet conduit 204 may direct lubricant into the lubricant reservoir 144 while the other of the first lubricant inlet conduit 200 or the second lubricant inlet conduit 204 may direct lubricant into the housing 132 to maintain a constant amount of lubricant in the housing 132. However, the lubrication system 136 may have any suitable quantity of lubricant inlet conduits in alternative embodiments, such as a single lubricant inlet conduit (e.g., the first lubricant inlet conduit 200) or more than two lubricant inlet conduits configured to direct lubricant into the housing 132.

The lubricant reservoir 144 also includes a relief or overfill valve 206 configured to discharge lubricant from the lubricant reservoir 144. For example, the relief valve 206 may be actuated to avoid storage of an excessive amount of lubricant within the lubricant reservoir 144 (e.g., caused by substantial overfilling of the housing 132 to cause the excessive amount of lubricant to flow into the lubricant reservoir 144), such as upon a pressure within the lubricant reservoir 144 exceeding a threshold pressure. As such, the relief valve 206 may help maintain a structural integrity of the lubricant reservoir 144 by avoiding lubricant buildup within the lubricant reservoir 144. Another valve, such as a relief/bleed valve, may additionally or alternatively be used to reduce an excessive amount of lubricant within the lubricant reservoir 144 to maintain the structural integrity of the lubricant reservoir 144.

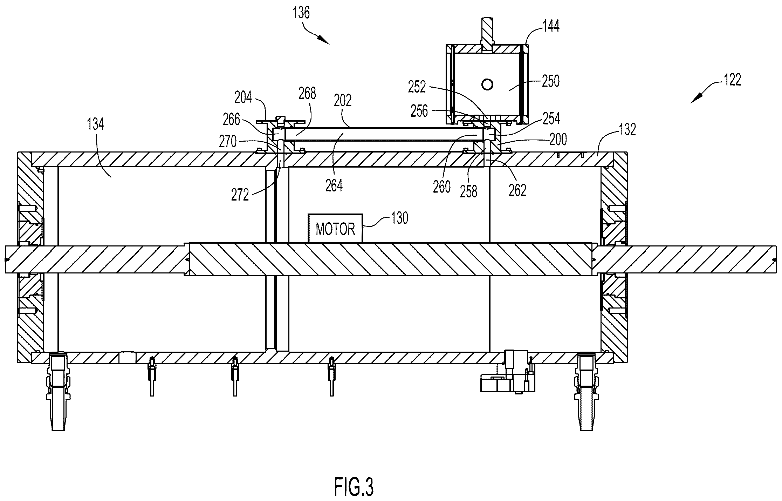

FIG. 3 is a cross-sectional side view of the pump drive system 122. The lubricant reservoir 144 of the lubrication system 136 of the pump drive system 122 defines a reservoir interior 250 in which lubricant is contained. The lubricant reservoir 144 includes a reservoir outlet 252 fluidly coupled to the reservoir interior 250 and configured to discharge lubricant from the reservoir interior 250 out of the lubricant reservoir 144. The first lubricant inlet conduit 200 defines a first conduit interior 254 with a first conduit inlet 256, a first conduit outlet 258, and a second conduit outlet 260. The first lubricant inlet conduit 200 is mounted onto the lubricant reservoir 144 to align the first conduit inlet 256 of the first lubricant inlet conduit 200 with the reservoir outlet 252 of the lubricant reservoir 144, thereby fluidly coupling the first lubricant inlet conduit 200 and the lubricant reservoir 144 to one another. Additionally, the first lubricant inlet conduit 200 is mounted onto the housing 132 such that the first conduit outlet 258 is aligned with a first housing inlet 262 of the housing 132. As such, lubricant may be directed from the reservoir interior 250, through the reservoir outlet 252, through the first conduit inlet 256, through the first conduit outlet 258, and through the first housing inlet 262 to flow from the lubrication system 136 into the housing 132.

The intermediate conduit 202 defines a second conduit interior 264, and the intermediate conduit 202 is mounted to the first lubricant inlet conduit 200 such that the second conduit interior 264 of the intermediate conduit 202 is aligned with the second conduit outlet 260 of the first lubricant inlet conduit 200. Moreover, the second lubricant inlet conduit 204 defines a second conduit interior 266 with a second conduit inlet 268 and a third conduit outlet 270. The intermediate conduit 202 is mounted onto the second lubricant inlet conduit 204 such that the second conduit interior 264 of the intermediate conduit 202 is aligned with the second conduit inlet 268 of the second lubricant inlet conduit 204, thereby fluidly coupling the intermediate conduit 202 and the second lubricant inlet conduit 204 to one another. The second lubricant inlet conduit 204 is mounted onto the housing 132 such that the third conduit outlet 270 of the second lubricant inlet conduit 204 is aligned with a second housing inlet 272 of the housing 132. Thus, lubricant may also be directed through the second conduit outlet 260, through the second conduit interior 264, through the second conduit inlet 268, through the third conduit outlet 270, and through the second housing inlet 272 to flow into the housing 132 via the second lubricant inlet conduit 204. Regardless of whether the lubricant is directed into the housing 132 via the first lubricant inlet conduit 200 or via the second lubricant inlet conduit 204, the lubricant fills the interior 134 of housing 132 to provide a cushion or buffer between the motor 130 and the housing 132 (e.g., by submerging the motor 130).

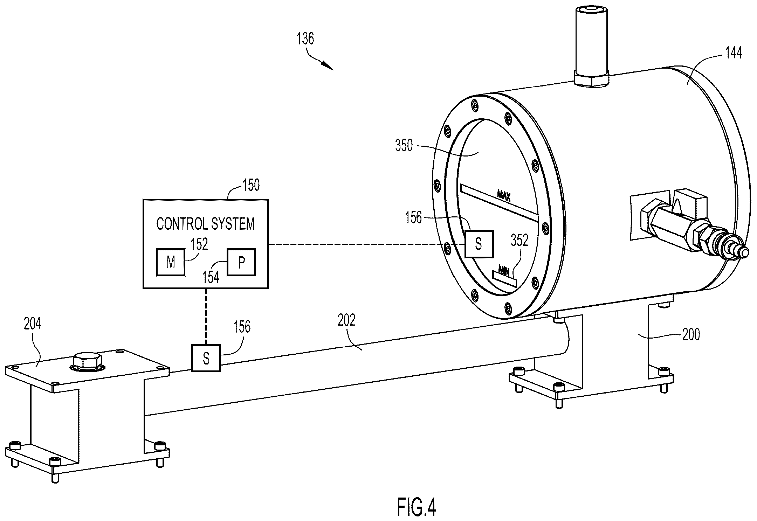

FIG. 4 is a perspective view of the lubrication system 136, as well as the control system 150 configured to monitor a level of lubricant within the lubricant reservoir 144. In this depicted embodiment, the sensor 156 is an optical sensor, such as a camera, configured to determine a visual parameter indicative of the level of lubricant within the lubricant reservoir 144. To this end, the lubricant reservoir 144 includes a wall or panel 350 (e.g., a sight glass) that is at least partially transparent or at least partially translucent to enable viewing therethrough. Thus, the lubricant contained within the lubricant reservoir 144, and therefore the level of lubricant within the lubricant reservoir 144, may be visible through the wall 350. However, the sensor 156 need not be an optical sensor and may also comprise any other type of sensor capable of providing data relating to an amount of lubricant in lubrication system 136.

In embodiments in which the sensor 156 is an optical sensor, the sensor 156 may be positioned to face the panel 350 to enable determination of the visual parameter indicative of the level of lubricant within the lubricant reservoir 144. As shown, in some instances, this may be accomplished by mounting the sensor 156 to the intermediate conduit 202 and/or to wall 350. Additionally or alternatively, the sensor 156 might be mounted to the second lubricant inlet conduit 204 and/or the housing 132. The parameter determined by the sensor 156 may include an image or multiple images (e.g., a video) of the wall 350 and of the lubricant visible through the wall 350, a refraction or deflection of light through the wall 350 (e.g., and through the lubricant), or any other suitable visual parameter indicative of the lubricant level relative to the wall 350.

The control system 150 is configured to receive the data (e.g., an image that shows a meniscus of the lubricant visible through the wall 350 or image data representative thereof) captured by the sensor 156 and to determine the lubricant level within the lubricant reservoir 144 based on the data. For instance, the control system 150 is configured to determine whether the lubricant level is above a threshold level 352 of the wall 350 to indicate a sufficient amount of lubricant within the lubricant reservoir 144, and the control system 150 is configured to perform an operation in response to determining the lubricant level is below the threshold level 352 to address the low amount of lubricant in the lubricant reservoir 144.

In additional or alternative embodiments, the sensor 156 is configured to determine a non-visual parameter indicative of the amount of lubricant within the lubricant reservoir 144. By way of example, the parameter may include a capacitance through the wall 350. In such embodiments, the sensor 156 may be mounted onto the wall 350, and the wall 350 may have a particular thickness and/or material to enable the sensor 156 to determine the capacitance, which changes based on whether the lubricant in the lubricant reservoir 144 is at least level with the sensor 156. That is, the sensor 156 may detect a first capacitance while the lubricant does not overlap with the sensor 156 across the wall 350 (e.g., the first capacitance is provided by the wall 350 without being affected by presence of the lubricant). Therefore, the first capacitance indicates the lubricant does not reach the sensor 156 and that the lubricant level is therefore insufficient.

Then, the sensor 156 may detect a second capacitance, different from (e.g., less than) the first capacitance, while the lubricant overlaps with the sensor 156 across the wall 350 (e.g., the presence of the lubricant adjusts the detected capacitance from the first capacitance provided by the wall 350 such that the second capacitance is provided by both the wall 350 and the lubricant). Thus, the second capacitance indicates that lubricant reaches the position (e.g., the height) of the sensor 156 at the wall 350 and is at a sufficient level in the lubricant reservoir 144. As such, the sensor 156 may be mounted onto the wall 350 near the threshold level 352 of the wall 350 such that the capacitance detected by the sensor 156 indicates whether the lubricant level is at the threshold level 352 (e.g., whether the lubricant overlaps with the sensor 156 with respect to the threshold level 352). The control system 150 is configured to receive the capacitance detected by the sensor 156 and operate based on the received capacitance, such as to perform an operation in response to determining the capacitance is above a threshold value to address the low amount of lubricant in the lubricant reservoir 144.

In either embodiment, the sensor 156 is exterior to the lubricant reservoir 144. Thus, the sensor 156 does not come into contact with the lubricant in the lubricant reservoir 144. Consequently, the sensor 156 may not reduce a storage capacity of the lubricant reservoir 144, affect (e.g., impede) a flow of the lubricant into or out of the housing 132, and/or contaminate the lubricant. This may ensure the lubrication system 136 operates effective and continually directs lubricant into the housing 132. Moreover, the separation of the lubricant and the sensor 156 may preserve a structural integrity of the sensor 156, thereby enabling the sensor 156 to operate effectively and/or extending the useful lifespan of the sensor 156.

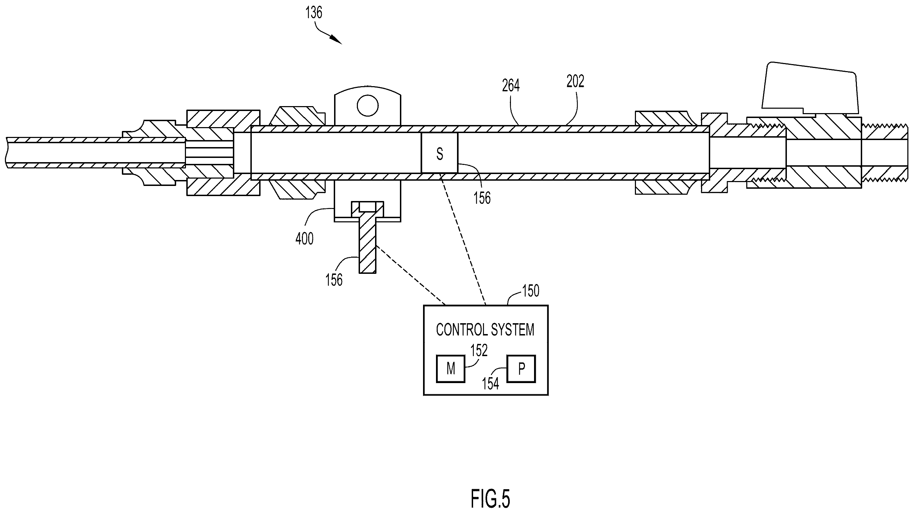

FIG. 5 is a cross-sectional side view of a portion of the lubrication system 136 illustrating an embodiment in which the sensor 156 is configured to monitor the lubricant within the intermediate conduit 202. That is, the sensor 156 is configured to monitor lubricant flow between the first lubricant inlet conduit 200 and the second lubricant inlet conduit 204. In some embodiments, the parameter detected by the sensor 156 includes a flow rate of lubricant. The control system 150 may receive data indicative of the flow rate and compare the flow rate to a threshold flow rate. The flow rate being at or above the threshold flow rate may indicate that lubricant is flowing sufficiently into the housing 132 (e.g., via the second lubricant inlet conduit 204 configured to receive lubricant from the intermediate conduit 202). In turn, this may indicate that the lubricant level within the lubricant reservoir 144 is also sufficient (e.g., this lubricant level may be causing lubricant to flow through the intermediate conduit 202 at or above the threshold flow rate). However, the flow rate being below the threshold flow rate may indicate that the lubricant level within the lubricant reservoir 144 is insufficient. Thus, in response to determining the flow rate is below the threshold flow rate, the control system 150 may perform an operation to address the low lubricant level within the lubricant reservoir 144.

In additional or alternative embodiments, a different parameter may be detected by the sensor 156. As an example, the sensor 156 may be configured to determine presence of the lubricant within the intermediate conduit 202. In certain embodiments, the sensor 156 may be disposed exterior to the intermediate conduit 202 to avoid contact with the lubricant flowing through the second conduit interior 264 of the intermediate conduit 202. For example, the lubrication system 136 may include a sensor housing 400 mounted onto the intermediate conduit 202 (e.g., at an exterior of the intermediate conduit 202), and the sensor 156 is at least partially disposed within the sensor housing 400. Thus, the sensor housing 400 may shield at least a portion of the sensor housing 400 from exterior elements, such as dust and debris, as well as secure the sensor 156 to the intermediate conduit 202.

Additionally, the intermediate conduit 202 may be composed of a particular material to enable the sensor 156 to monitor a parameter related to the lubricant. For instance, the intermediate conduit 202 may be composed of glass or other material that is at least partially translucent or transparent to enable the sensor 156 to visually monitor the lubricant within the intermediate conduit 202 and/or to determine a capacitance through the intermediate conduit 202. Alternatively, the sensor 156 may be disposed within the second conduit interior 264 of the intermediate conduit 202 to monitor the parameter related to the lubricant within the second conduit interior 264. For example, the sensor 156 may include a flowmeter through which the lubricant flows for delivery into the housing 132, and the sensor 156 is configured to determine the flow rate of the lubricant flowing through the flowmeter.

Although the illustrated sensor 156 is configured to detect lubricant within the intermediate conduit 202, in additional or alternative embodiments, the sensor 156 may be configured to detect lubricant within a different part of the conduit system 148 of the lubrication system 136, such as within the first lubricant inlet conduit 200 and/or within the second lubricant inlet conduit 204. Indeed, lubricant flow within any suitable portion of the conduit system 148 may indicate the level of lubricant within the lubricant reservoir 144 and readily deliverable into the housing 132.

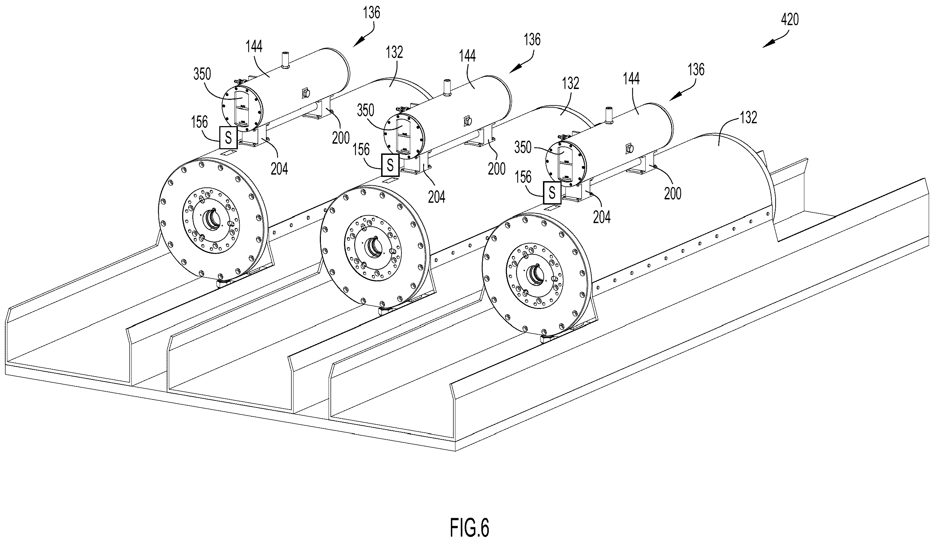

FIG. 6 is a perspective view of another pump system 420 that includes a plurality of housings 132 and respective lubrication systems 136 configured to direct a lubricant into the housings 132. The illustrated lubricant reservoirs 144 of the lubrication systems 136 are directly coupled to (e.g., mounted onto) the corresponding first lubricant inlet conduits 200, as well as to the corresponding second lubricant inlet conduits 204. For instance, each lubricant reservoir 144 may be extended or elongated to enable direct coupling to the first lubricant inlet conduit 200 and to the second lubricant inlet conduit 204. Thus, the lubricant reservoirs 144 are configured to direct lubricant into the housings 132 without the intermediate conduit 202. For example, movement of the pump drive systems 122 may force lubricant back and forth between the housings 132 and the lubricant reservoirs 144, and one of the respective first lubricant inlet conduits 200 or the respective second lubricant inlet conduits 204 may direct lubricant into the corresponding lubricant reservoir 144 while the other of the respective first lubricant inlet conduits 200 or the respective second lubricant inlet conduits 204 may direct lubricant into the corresponding housing 132. Thus, a constant amount of lubricant in the housings 132 may be maintained.

Sensors 156 are configured to monitor an amount of lubricant in the lubricant reservoirs 144. In some embodiments, the sensors 156 are configured to determine the amount of lubricant through the walls 350 (e.g., the sensors 156 are mounted onto the walls 350 and/or onto the housings 132 to face the walls 350). In additional or alternative embodiments, the sensors 156 are configured to determine a flow rate of lubricant through the lubricant systems 136, such as through the first lubricant inlet conduits 200 and/or through the second lubricant inlet conduits 204.

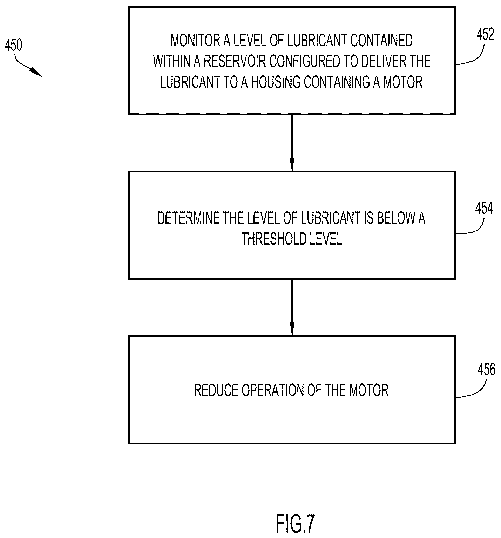

FIG. 7 is a flowchart of a method 450 for operating the pump drive system 122. In some embodiments, a single entity (e.g., the control system 150) may perform the operations of the method 450. In additional or alternative embodiments, the operations of the method 450 may be performed by separate entities. It should also be noted that the method 450 may be performed differently than depicted. For example, an additional operation may be performed, and/or any of the depicted operations may be performed differently, in a different order, and/or not be performed.

At block 452, an amount of lubricant contained within the lubricant reservoir 144 is monitored. For example, the sensor 156 may determine a parameter indicative of the level of lubricant. In certain embodiments, the parameter includes a height of the lubricant contained within the lubricant reservoir 144 and visible through the wall 350 (e.g., captured via an image, indicated by a refractive property through the lubricant reservoir 144). In additional or alternative embodiments, the parameter includes a capacitance detected through the wall 350. In further embodiments, the parameter includes a flow rate of lubricant (e.g., within the first lubricant inlet conduit 200, within the intermediate conduit 202, within the second lubricant inlet conduit 204).

At block 454, the level of lubricant is determined to be below a threshold level. For example, the level of the lubricant being below the threshold level may be indicated by the height of the lubricant being below a threshold height, the capacitance through the wall 350 being below a threshold capacitance, and/or a flow rate of lubricant through the intermediate conduit 202 being below a threshold flow rate. The low level of lubricant in the lubricant reservoir 144 may indicate that lubricant is not readily deliverable into the housing 132.

At block 456, in response to determining the level of lubricant is below a threshold level, operation of the motor 130 may be reduced. This is because there may be an increased potential of the motor 130 directly contacting the housing 132 while lubricant is not readily deliverable into the housing 132. Direct contact between the motor 130 and the housing 132 during operation of the motor 130 (e.g., resulting movement of the motor 130 against the housing 132) may be detrimental to the operation of the pump system 100. Thus, reducing operation of the motor 130 may avoid impact of the operation of the pump system 100. In some embodiments, the operation of the motor 130 is suspended by interrupting a supply of power directed to the motor 130. In additional or alternative embodiments, some operation of the motor 130 may be enabled such that the pump system 100 can continue to pressurize fluid (e.g., at a limited capacity).

In additional or alternative embodiments, an operation may be performed in response to a determination that the level of lubricant in the lubricant reservoir 144 is above a higher threshold level, which may indicate an excessive amount of lubricant in the lubricant reservoir 144. Such a determination may be made using similar techniques discussed with respect to determination of a low level of lubricant, such as by using image data, a refractive property, a capacitance, and/or a flow rate. In such circumstances, it may be desirable to avoid increasing the amount of lubricant in the lubricant reservoir 144. For example, the relief valve 206 may be actuated to discharge lubricant from the lubricant reservoir 144. Additionally or alternatively, operation of the lubrication system 136 and/or of the lubricant source 146 may be suspended or reduced to avoid further accumulation of lubricant within the lubricant reservoir 144. Thus, a desirable amount of lubricant within the lubricant reservoir 144 may be maintained.

As used herein, unless expressly stated to the contrary, use of the phrase 'at least one of , 'one or more of, 'and/or', variations thereof, or the like are open-ended expressions that are both conjunctive and disjunctive in operation for any and all possible combination of the associated listed items. For example, each of the expressions 'at least one of X, Y and Z', 'at least one of X, Y or Z', 'one or more of X, Y and Z', 'one or more of X, Y or Z' and 'X, Y and/or Z' can mean any of the following: 1) X, but not Y and not Z; 2) Y, but not X and not Z; 3) Z, but not X and not Y; 4) X and Y, but not Z; 5) X and Z, but not Y; 6) Y and Z, but not X; or 7) X, Y, and Z.

Additionally, unless expressly stated to the contrary, the terms 'first', 'second', 'third', etc., are intended to distinguish the particular nouns they modify (e.g., element, condition, node, module, activity, operation, etc.). Unless expressly stated to the contrary, the use of these terms is not intended to indicate any type of order, rank, importance, temporal sequence, or hierarchy of the modified noun. For example, 'first X' and 'second X' are intended to designate two 'X' elements that are not necessarily limited by any order, rank, importance, temporal sequence, or hierarchy of the two elements. Further as referred to herein, 'at least one of and 'one or more of can be represented using the '(s)' nomenclature (e.g., one or more element(s)).

Each example embodiment disclosed herein has been included to present one or more different features. However, all disclosed example embodiments are designed to work together as part of a single larger system or method. This disclosure explicitly envisions compound embodiments that combine multiple previously-discussed features in different example embodiments into a single system or method.

One or more advantages described herein are not meant to suggest that any one of the embodiments described herein necessarily provides all of the described advantages or that all the embodiments of the present disclosure necessarily provide any one of the described advantages. Numerous other changes, substitutions, variations, alterations, and/or modifications may be ascertained to one skilled in the art and it is intended that the present disclosure encompass all such changes, substitutions, variations, alterations, and/or modifications as falling within the scope of the appended claims.

## Claims

1. A pump drive system (122), comprising:
a housing (132);
an electric motor (130) disposed within the housing, the electric motor being configured to drive a piston of a pump;
a lubricant reservoir (144) configured to store lubricant;
a conduit configured to direct lubricant from the lubricant reservoir into the housing (132) to submerge the electric motor in lubricant; and
a sensor (156) configured to monitor a level of lubricant in the lubricant reservoir (144).

2. The pump drive system (122) of claim 1, comprising a control system (150) communicatively coupled to the sensor (156), wherein the control system (150) is configured to:
determine the level of lubricant in the lubricant reservoir (144) is below a threshold level; and suspend operation of the electric motor in response to determining the level of lubricant in the lubricant reservoir (144) is below the threshold level.

3. The pump drive system (122) of claim 2, wherein the control system (150) is configured to interrupt a supply of power to the electric motor (130) to suspend operation of the electric motor (130) in response to determining the level of lubricant in the lubricant reservoir (144) is below the threshold level.

4. The pump drive system of claim 1, wherein the lubricant reservoir (144) comprises a wall (350), and
the sensor is configured to determine a capacitance through the wall to monitor the level of lubricant in the lubricant reservoir wherein the sensor is optionally mounted to the wall.

5. The pump drive system of claim 1, wherein the lubricant reservoir (144) comprises a wall (350) that is at least partially transparent or translucent, and the sensor (156) comprises an optical sensor configured to monitor the level of lubricant in the lubricant reservoir with respect to the wall (350) or configured to capture an image of lubricant contained within the lubricant reservoir (144) and visible through the wall (350) to monitor the level of lubricant in the lubricant reservoir (144).

6. The pump drive system of claim 5, wherein the optical sensor is configured to determine a refractive property associated with the wall (350) to monitor the level of lubricant in the lubricant reservoir (144) with respect to the wall.

7. The pump drive system of claim 1, wherein the sensor (156) is configured to determine a parameter of lubricant directed through the conduit, the parameter being indicative of the level of lubricant in the lubricant reservoir, wherein the parameter optionally comprises a flow rate.

8. The pump drive system of claim 7, wherein the conduit is a first conduit, and the pump drive system comprises:
a second conduit mounted to the lubricant reservoir and to the housing, wherein
the second conduit is configured to direct lubricant from the lubricant reservoir into the housing; and
a third conduit mounted to the housing, wherein the first conduit is fluidly coupled to the second conduit and to the third conduit and is configured to direct lubricant from the second conduit to the third conduit, and the third conduit is configured to direct lubricant from the first conduit into the housing.

9. A booster pump system, comprising a pump drive system with a housing, an electric motor, lubricant reservoir, a conduit and a sensor in accordance to any of the preceding claims further comprising:
a cylinder comprising a chamber;
a piston disposed within the chamber of the cylinder; wherein the electric motor is configured to drive movement of the piston relative to the chamber of the cylinder to pressurize fluid within the chamber and discharge pressurized fluid from the chamber, wherein the conduit is fluidly coupled to the lubricant reservoir and configured to direct lubricant from the lubricant reservoir into the housing; wherein the sensor is configured to monitor a level of lubricant in the lubricant reservoir.

10. The booster pump system of claim 9, wherein the sensor (156) is disposed externally of the lubricant reservoir (144).

11. The booster pump system of claim 10, wherein the sensor is coupled to the conduit; wherein the conduit is optionally at least partially transparent or translucent, and the sensor (156) comprises an optical sensor configured to monitor a parameter of lubricant in the conduit, the parameter being indicative of the level of lubricant in the lubricant reservoir (144).

12. A non-transitory computer-readable medium comprising instructions that, when executed by one or more processors, are configured to cause the one or more processors to perform operations comprising:
monitoring a level of lubricant contained within a lubricant reservoir, wherein the lubricant reservoir (144) is configured to store lubricant and to direct lubricant into a housing (132) containing a motor (130) of a booster pump, the motor being configured to drive movement of a piston of the booster pump to pressurize fluid within a cylinder of the booster pump;determining the level of lubricant in the lubricant reservoir (144) is below a threshold level; and reducing operation of the motor in response to determining the level of lubricant in the lubricant reservoir (144) is below the threshold level.

13. The non-transitory computer-readable medium of claim 12, wherein the instructions, when executed by the one or more processors, are configured to cause the one or more processors to perform operations comprising:
receiving sensor data from a sensor (156) disposed exterior to the lubricant reservoir (144); and determining the level of lubricant contained within the lubricant reservoir (144) based on the sensor data.

14. The non-transitory computer-readable medium of claim 13, wherein the lubricant reservoir (144) comprises a wall (350) that is at least partially transparent or translucent such that lubricant contained within the lubricant reservoir (144) is visible through the wall, and the sensor data comprises an image of the wall of the lubricant reservoir (144).

15. The non-transitory computer-readable medium of claim 14, wherein the instructions, when executed by the one or more processors, are configured to cause the one or more processors to interrupt a supply of power to the motor (130) to reduce operation of the motor (130) in response to determining the level of lubricant in the lubricant reservoir (144) is below the threshold level.
